(19)

Europäisches
Patentamt
European
Patent Office
Office européen
des brevets

(11) **EP 2 407 569 A1**

(12) **EUROPEAN PATENT APPLICATION**

published in accordance with Art. 153(4) EPC

(43) Date of publication:
**18.01.2012 Bulletin 2012/03**

(21) Application number: **10750839.2**

(22) Date of filing: **09.03.2010**

(51) Int Cl.:
*C22C 38/00* (2006.01)     *C22C 18/04* (2006.01)
*C22C 38/14* (2006.01)     *C22C 38/58* (2006.01)

(86) International application number:
**PCT/JP2010/053922**

(87) International publication number:
**WO 2010/104086 (16.09.2010 Gazette 2010/37)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **10.03.2009 JP 2009057171
27.02.2010 JP 2010043628**

(71) Applicant: **NISSHIN STEEL CO., LTD.
Chiyoda-ku
Tokyo 100-8366 (JP)**

(72) Inventors:
• **FUJIMOTO, Nobukazu
Kure-shi
Hiroshima 737-0027 (JP)**

• **KODAMA, Shinichi
Kure-shi
Hiroshima 737-0027 (JP)**
• **FUJIWARA, Susumu
Kure-shi
Hiroshima 737-0027 (JP)**

(74) Representative: **Wagner, Karl H.
Wagner & Geyer Partnerschaft
Patent- und Rechtsanwälte
Gewürzmühlstrasse 5
80538 München (DE)**

(54) **ZINC BASED ALLOY COATED STEEL HAVING SUPERIOR RESISTANCE TO LIQUID METAL EMBRITTLEMENT AND CRACKING**

(57)    [Problem] To provide a zinc-based alloy-plated steel material in which low-carbon steel is used as the base material and which is excellent in resistance to molten-metal embrittlement cracking and has good workability.

[Means for Resolution]

A zinc-based alloy-plated steel material excellent in resistance to molten-metal embrittlement cracking, which has a zinc-based alloy-plating layer on the surface of a steel base material that has a chemical composition comprising, as % by mass, C: 0.010 to 0.100%, Si: at most 1.50%, Mn: at most 2.00%, P: at most 0.100%, S: at most 0.030%, N: at most 0.0050%, Ti: at most 0.050%, and B: 0.0003 to 0.0100%, with a balance of Fe and inevitable impurities, and having the value L to be defined by the following formula, L = {(Ti/48) + (B/11) }/(N/14), of at least 5.50, and has a metallographic structure comprising ferrite: 10 to 99% by volume with a balance of bainite, pearlite, cementite or martensite.

Fig.3

EP 2 407 569 A1

**Description**

TECHNICAL FIELD

The present invention relates to a zinc-based alloy-plated steel material which, when welded in working, is free from a risk of molten-metal embrittlement cracking in the weld heat-affected zone thereof.

BACKGROUND ART

A steel material processed for zinc-based plating such as Zn plating, Zn-Al-Mg alloy plating or the like, or for Cu plating may be uncommonly cracked in the weld heat-affected zone thereof. This phenomenon is generally referred to as molten-metal embrittlement cracking. This may be considered to occur because, when a plated steel material is welded or when a welded structure is hot-dipped (plated by dipping in a molten metal), the molten plating component would affect the grain boundary of the base material, and this may be a trigger to cause brittle fracture (grain boundary fracture) of the material.

Patent Reference 1 discloses that, as a method for preventing molten-metal embrittlement cracking to occur immediately after welding in a case of Zn-Al-Mg alloy-plated steel materials, application of a base material (original sheet to be plated) with Ti and B added thereto is effective. This is considered to be mainly owing to the effect of the free B that segregates in the crystal grain boundary to reinforce the grain boundary. Patent References 2 and 3 disclose a Zn-Al-Mg alloy-plated steel sheet improved in the resistance to molten-metal embrittlement cracking thereof in which Nb, V, Mo and Zr-added steel or Cr-added steel or the like is used as the base material (original sheet to be plated).

CITATION LIST

PATENT REFERENCES

Patent Reference 1: JP-A 2003-3238
Patent Reference 2: JP-A 2006-97129
Patent Reference 3: JP-A 2008-184685

SUMMARY OF THE INVENTION

PROBLEMS THAT THE INVENTION IS TO SOLVE

In a plated steel sheet having a tensile strength of from 200 to 500 MPa, which is widely used in deforming utilization, the C content of the steel material is generally at most 0.1% by mass or so in many cases. In this description, the steel having a C content of at most 0.1% by mass is referred to as low-carbon steel. Unless otherwise specifically indicated,"%" in the steel composition means % by mass. The present inventors have investigated in detail the molten-metal embrittlement cracking of a zinc-based alloy-plated steel material and, as a result, have known that, in a zinc-based alloy-plated steel material in which low-carbon steel is used as the base material, molten-metal embrittlement cracking occurs more readily than in others where a steel material having a C content of more than 0. 1% is used as the base material. Specifically, when a method of adding Ti and B to the base material is merely employed in a case where the base material is low-carbon steel, the effect of preventing the risk of molten-metal embrittlement cracking therein may be often insufficient when the welding condition is extremely severe. In this respect, addition of Nb, V, Mo, Zr and Cr as disclosed in Patent References 2 and 3 is considered to be extremely effective, but on the contrary, it could be a cause to lower the workability of low-carbon steel.

An object of the present invention is to provide a zinc-based alloy-plated steel material using low-carbon steel as the base material, in which molten-metal embrittlement cracking hardly occurs and which has good workability.

MEANS FOR SOLVING THE PROBLEMS

As a result of detailed investigations, the inventors have found that, even though low-carbon steel is used as a steel base material to be plated, the plated steel can be stably improved to be free from a risk of molten-metal embrittlement cracking and can be kept to have good workability, when the Ti and B amount added to the base material is strictly controlled in relation to the N content thereof and when the base material is made to have a composite metallographic structure that contains ferrite in an amount not lower than a predetermined level. Based on these findings, the invention has been completed.

The invention provides a zinc-based alloy-plated steel material excellent in resistance to molten-metal embrittlement cracking, which has a zinc-based alloy-plating layer on the surface of a steel base material that has a chemical composition comprising, as % by mass, C: 0.010 to 0.100%, Si: at most 1.50%, Mn: at most 2.00%, P: at most 0.100%, S: at most 0.030%, N: at most 0.0050%, Ti: at most 0.050%, B: 0.0003 to 0.0100%, and optionally at least one of Cr: at most 2.00%, Nb: at most 0.1%, V: at most 0.50%, Mo: at most 0.50% and Zr: at most 0.50%, with a balance of Fe and inevitable impurities, and having the value L according to the following formula (1) of at least 5.50, and has a metallographic structure comprising ferrite: 10 to 99% by volume with a balance of bainite, pearlite, cementite or martensite:

$$L = \{(Ti/48) + (B/11)\}/(N/14) \ \ldots \ (1).$$

In the formula (1), the content of the element as % by mass is assigned to the element symbol. Each structure of ferrite, pearlite, bainite and martensite may contain any fine precipitates and inclusions so far as it satisfies the above-mentioned constitutive composition. In this description, "ferrite" merely so referred to means a ferrite phase excluding the ferrite phase to constitute pearlite. "Cementite" merely so referred to herein means a cementite phase excluding the cementite phase to constitute pearlite.

Zinc-based alloy plating means to form a plating layer that has a chemical composition comprising at least one of Al: at most 60.0% by mass, Mg: at most 10.0% by mass, Ti: at most 0.1% by mass, B: at most 0.05% by mass, Si: at most 2.0% by mass and Fe: at most 2.0% by mass, with a balance of Zn and inevitable impurities. In case where such a plating layer is formed according to a hot-dip plating method, the structure of the cross section of the plating layer generally exhibits a solidification structure formed of some metal phases, but the chemical composition of the entire plating layer nearly reflects the plating bath composition. Zinc-based alloy plating to which the invention is especially effectively applied is Zn-Al-Mg-basedalloyplating. Concretely, forming a zinc-based alloy-plating layer that comprises, as % by mass, Al: 3.0 to 22.0% and Mg: 1.0 to 10.0% and further contains at least one of Ti: at most 0.1%, B: at most 0.05%, Si: at most 2.0% and Fe: at most 2.0% with a balance of Zn and inevitable impurities is one preferred subject of the invention.

ADVANTAGE OF THE INVENTION

The invention has made it possible to provide a zinc-based alloy-plated steel material in which low-carbon steel having a C content of at most 0.10% by mass is used as the base material and which has remarkably improved resistance to molten-metal embrittlement cracking and maintains good workability. Accordingly, both corrosion resistance improvement by zinc-based alloy plating and reliability improvement in welded parts are realized in welded structures comprising a low-carbon steel material and having various shapes.

BRIEF DESCRIPTION OF THE DRAWINGS

[Fig. 1] This is a view graphically showing the shape of a boss-welded member.
[Fig. 2] This is a cross-sectional view graphically showing a method for restraining a test piece in restrained boss welding.
[Fig. 3] This is a graph illustrating the relationship between the L value of the chemical structure of a steel base material and the maximum cracking depth therein.

MODE FOR CARRYING OUT THE INVENTION

The matters of specifying the invention are described below.

[Chemical Composition of Steel Base Material]

C is an element effective for securing the material strength, and the invention is directed to steel having a C content of at least 0.010%. The C content may be controlled to be more than 0.010%. However, the increase in the C content may lower ductility and therefore it may become difficult to stably obtain a steel material having good workability. As a result of various investigations, the uppermost limit of the C content is 0.100% in consideration of the use of low-carbon steel.

Si is an element effective for improving the strength by dissolving in the ferrite phase. More effectively, the Si content is secured to be at least 0.01%. However, addition of too much Si will be a cause of ductility reduction and will be a cause of plating-ability deterioration as forming a thick Si layer on the surface of the steel material; and accordingly, the Si content is limited to be at most 1.50%. More preferably, the content is at most 1.00%, or may be controlled to be at most 0.70%, or further at most 0.10%.

Mn is an element effective for prevention of S-caused embrittlement and for strength improvement. More effectively, the Mn content is secured to be at least 0.01%. However, addition of too much Mn will be a cause of workability and weldability deterioration and will be a cause of having a negative influence on plating ability since Mn may thicken on the surface of the steel material; and accordingly, the Mn content is limited to fall within a range of at most 2.00%. The content may be controlled to be fall within a range of at most 1.00%, or even at most 0.50%.

P has a negative influence on ductility, and therefore in the use application where high workability is required, the P content is preferably lower. However, P is effective for increasing strength, and therefore in case where strength is specifically emphasized, P may be positively incorporated within a range not having a negative influence on workability and plating ability. In such a case, for example, it is more effective to secure the P content of at least 0.010%. The P content may be allowable to be up to 0.100%, but is more preferably within a range of at most 0.050%.

S detracts from hot workability and therefore the S content is desired to be reduced as much as possible. As a result of various investigations, the S content is allowable to be up to 0.030% by mass.

N reacts with B to form a boride, and causes to reduce the amount of free B effective for improving resistance to molten-metal embrittlement cracking. Therefore in the invention, the N content of the steel base material is as low as possible. As a result of investigations, the N content is limited to be at most 0.005%.

Ti is a strong nitride-forming element, and is an element important for fixing N in the steel base material as TiN. When N is fixed, the amount of free B is secured and therefore the effect of improving the resistance tomolten-metal embrittlement cracking by free B is thereby exhibited. The necessary amount of Ti is defined by the value L of the formula (1) to be mentioned below. More preferably, the Ti content of at least 0.015% is secured and the value L is defined to satisfy the requirement; and even more preferably, the Ti content of at least 0.020% is secured. However, even though too much Ti is added, the above effect may be saturated and addition of a large amount of Ti may be a cause of worsening the workability of steel material; and therefore, the Ti content is limited to fall within a range of at most 0.050%.

B is an element effective for inhibiting molten-metal embrittlement cracking. Its effect is considered to result from the segregation of free B in the crystal grain boundary thereby bringing about interatomic bonding force enhancement. As a result of various investigations, it is important that B is contained in steel so that the value L to be defined by the formula (1) mentioned below could be a value not lower than a predetermined level in accordance with the N content and the Ti content, however, for making the free B fully exhibit the effect thereof, the B content must be secured to be at least 0.0003%. More preferably, the B content is at least 0.0010%. However, addition of too much B causes boride formation and workability deterioration, and therefore, the uppermost limit of the B content is limited to be 0.0100%.

Cr, Nb, V, Mo and Zr segregate in the grain boundary to thereby exhibit the effect of inhibiting molten-metal embrittlement cracking. The effect becomes more remarkable through combined addition with B. Accordingly, at least one element of these may be optionally incorporated in the steel base material. For fully exhibiting the above-mentioned effect, it is more effective that the content of Cr is at least 0.50%, Nb is at least 0.01%, V is at least 0.05%, Mo is at least 0.05% and Zr is at least 0.05%. However, too much addition of these elements may saturate the effect but rather lower the steel toughness and workability; and therefore when at least one of these elements is added, the range of their content is Cr: at most 2.00%, Nb: at most 0.10%, V: at most 0.50%, Mo: at most 0.50%, and Zr: at most 0.50%.

The content of each element in the steel base material is limited to fall within the above range, and in addition, it is important that the Ti, B and N content is so controlled that the L value to be defined by the following formula (1) is at least 5.50.

$$L = \{(Ti/48) + (B/11)\}/(N/14) \ \ldots \ (1).$$

The value L is an index for defining the relationship between the Ti and N content and the free B content in steel.

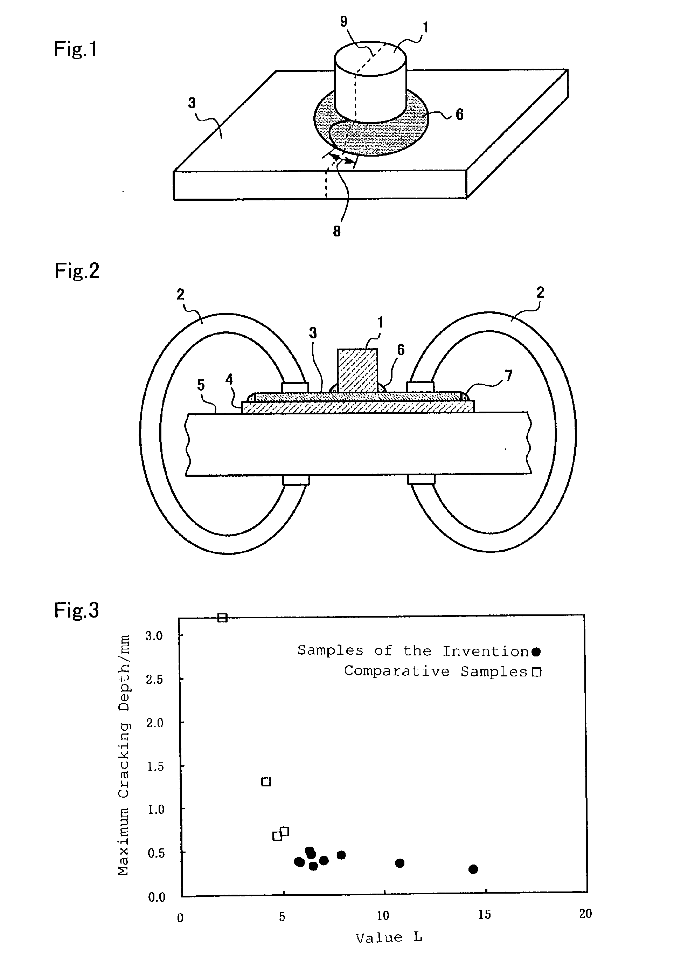

For securing the free B content effective for resistance to molten-metal embrittlement cracking, it is extremely effective to reduce free N. For reducing free N, Ti must be added in an amount enough to fix the free N. In case where all N in steel is fixed with Ti, theoretically Ti may be good to be added to steel in an amount equivalent to the N content therein. However, Ti may form compounds with S, C and others except N. The amount of such Ti compounds may change depending on the production condition in hot rolling, annealing or the like and on the cooling condition after welding, etc. Accordingly, for the purpose of completely fixing free N with Ti and surely segregating free B in the crystal grain boundary, it is important that Ti and B in an amount fully enough for the N content are added to steel. As a result of various investigations, it has been found that, when the value L is at least 5.50 in the low-carbon steel to which the invention is directed, then the remarkable effect of enhancing the resistance to molten-metal embrittlement cracking can be stably attained (see Fig. 3 mentioned below).

Heretofore it has been known that B is effective for enhancing resistance to molten-metal embrittlement cracking and, for the purpose of bringing out the effect, Ti addition and N reduction may be effective. However, it was difficult to stably and remarkably improve the resistance to molten-metal embrittlement cracking of a zinc-based alloy hot-dipped steel material where the base material is low-carbon steel, merely by employing the method of "B and Ti combined addition + N reduction" for it; and therefore, it was inevitable to employ a method of adding Nb, V, Mo, Zr and Cr to the material. However, when the Ti, B and N content in the material is so controlled as to satisfy the definition of the above-mentioned value L, then the resistance to molten-metal embrittlement cracking can be fully improved basically by grain boundary segregation of free B, even though not relying upon the effect of improving the resistance to molten-metal embrittlement cracking by addition of Nb, V, Mo, Zr and Cr as before.

[Metallographic Structure of Steel Base Material]

The zinc-based alloy-plated steel material of the invention is so controlled that the steel base material has a structure state that contains ferrite in an amount of at least 10% by volume with a balance of bainite, pearlite, cementite or martensite, for the purpose of making it exhibit good workability and exhibit good resistance to molten-metal embrittlement cracking. Ferrite plays a role of imparting good ductility (workability) to the steel material, owing to the soft property thereof. In welding, soft ferrite mainly deforms to thereby relax the stress by thermal strain, and the cracking by molten-metal embrittlement is thereby prevented. On the other hand, the remaining phase that is hard as compared with ferrite plays a role of increasing the strength of the material.

As a result of various investigations, the existence of ferrite in an amount of at least 10% by mass is necessary, for the purpose of making the low-carbon steel having the above-mentioned composition, to which the invention is directed, fully exhibit the above-mentioned role. More preferably, the ferrite amount of at least 45% by volume is secured. The remainder of the metallographic structure except ferrite is bainite, pearlite, cementite or martensite. When the amount of the structure part that contributes toward increasing the strength is too small, the strength may be insufficient in some applications. Accordingly, in the invention, the ferrite amount is limited to fall within a range of at most 99% by volume.

As described above, precipitates or inclusions formed in the stage of steel production may exist inside ferrite, bainite, pearlite or martensite, and they may be detected in optical microscopy. Ferrite, bainite, pearlite and martensite referred to in this description are meant to contain precipitates (excluding cementite) and inclusions. For example, "ferrite amount of 60% by volume" means that the total of the amount of precipitates (excluding cementite) and inclusions existing in the ferrite and the amount of ferrite phase itself of the metal phase is 60% by volume.

The metallographic structure of the steel base material to which the invention is directed depends on the chemical composition of the steel and the thermal history of hot working and annealing thereof. The steel material of, for example, a steel sheet that has a metallographic structure comprising ferrite: 10 to 99% by volume with a balance of bainite, pearlite, cementite or martensite, which is defined in the invention, can be produced by controlling the chemical composition of steel as above and controlling the extrusion temperature in hot rolling, the finish rolling temperature, the winding temperature, the cooling speed until winding, etc. In case of cold rolling, the structure change through heat treatment after cold rolling might be taken into consideration. In addition, the thermal history in hot-dip plating might be taken into consideration. Such steel sheet production conditions could be found within a range of conditions that could be set in plate sheet production plants in ordinary mass-scale production sites. Concretely, depending on the chemical composition, the relationship between the production condition and the metallographic structure is comprehended through preliminary experiments, and based on the data, suitable production conditions could be established.

[Zinc-Based Alloy Plating]

The surface of the above-mentioned steel base material is plated with a zinc-based alloy to give the plated steel material of the invention which is excellent in resistance to molten-metal embrittlement cracking. The zinc-based alloy plating may be attained according to a hot-dip plating method, as efficient in mass-scale production. Steel sheets may be plated in an ordinary continuous zinc-based hot-dip plating line.

Of zinc-based alloy plating, preferably employed is Zn-Al-Mg-based alloy plating as bringing about especially remarkable advantages of the invention. A Zn-Al-Mg-based alloy-plated steel material has high corrosion resistance and has become much popularized recently, however, the plated steel material of the type has a problem in that it is often cracked in a mode of molten-metal embrittlement cracking in welding. The invention exhibits an effect of remarkably improving the resistance to molten-metal embrittlement cracking of a Zn-Al-Mg-based alloy-plated steel material. Hereinunder described is a case of Zn-Al-Mg-based alloy hot-dip plating.

Al in a plating layer has an effect of enhancing the corrosion resistance of the plated steel material. When Al is incorporated in a plating bath, then it may exhibit an effect of preventing Mg oxide dross formation. For fully attaining these effects, the Al content in hot-dip plating must be at least 3.0% by mass, more preferably at least 4.0% by mass. On the other hand, when the Al content is more than 22.0% by mass, then the growth of the Fe-Al alloy layer in the interface between the plating layer and the steel base material may be great, thereby worsening the plating cohesiveness. For securing excellent plating cohesiveness, the Al content is preferably at most 15.0% by mass, and may be controlled to be at most 10.0% by mass.

Mg in the plating layer forms a uniform corrosion product on the surface of the plating layer, thereby exhibiting the effect of remarkably enhancing the corrosion resistance of the plated steel material. For sufficiently exhibiting the effect, the Mg content in hot-dip plating must be at least 1.0% by mass, and is preferably secured to be at least 2.0% by mass. On the other hand, when the Mg content is more than 10.0% by mass, it increases the risk of Mg oxide dross formation. For forming a plating layer of higher quality, the Mg content is preferably at most 5.0% by mass, and may be controlled to be at most 4.0% by mass.

When incorporated in the hot-dip plating bath, Ti and B may prevent the formation and the growth of a $Zn_{11}Mg_2$ phase that gives dot-like appearance failures in the Zn-Al-Mg-basedhot-dip plated steel material. Even when incorporated singly, Ti and B could exhibit the effect of preventing the $Zn_{11}Mg_2$ phase, but preferably, Ti and B are incorporated as combined, for the purpose of greatly broadening the latitude in production conditions. For fully attaining these effects, the Ti content in hot-dip plating is more effectively at least 0.0005% by mass and the B content is at least 0.0001% by mass. However, when the Ti content is too much, Ti-Al-based precipitates may form in the plating layer, therefore producing irregularities called "fish eyes" in the plating layer and the outward appearance of the plating layer may be thereby worsened. Accordingly, in case where Ti is added to the plating bath, its content range must be at most 0.1% by mass, preferably at most 0.01% by mass. When the B content is too much, then Al-B-based or Ti-B-based precipitates may form and grow coarsely, therefore also producing irregularities called "fish eyes" and the outward appearance of the plating layer may be thereby worsened. Accordingly, in case where B is added to the plating bath, its content range must be at most 0.05% by mass, preferably at most 0.005% by mass.

When Si is incorporated in the hot-dip plating bath, the growth of the Fe-Al alloy layer to be formed in the interface between the steel base material and the plating layer can be inhibited, which is therefore advantageous in improving the workability of the Zn-Al-Mg-based hot-dip plated steel material. In addition, Si in the plating layer prevents the plating layer from blacking and is effective for maintaining the surface glossiness of the layer. For fully exhibiting the effect of Si, the Si content in hot-dip plating is effectively at least 0.005% by mass. However, addition of too much Si increases the dross amount in the hot-dip plating bath, and therefore in case where Si is incorporated in the plating bath, its content range is at most 2.0% by mass.

Since a base material of steel is dipped and led to run through the hot-dip plating bath, in general, the bath is inevitably contaminated with Fe. In Zn-Al-Mg-based plating, contamination with Fe is allowable up to about 2.0% by mass or so. In the plating bath, other elements, for example, one or more of Ca, Sr, Na, rare earth elements, Ni, Co, Sn, Cu, Cr and Mn may mix, but preferably, the total content thereof is controlled to be at most 1.0% by mass.

Preferably, the plating amount is so controlled as to fall within a range of from 20 to 300 g/m². For steel sheets, the numerical range means the plating amount per side. The plating amount maybe controlled by the use of a gas wiping nozzle according to production of ordinary zinc-plated steel sheets. The wiping gas and the atmosphere gas in plating layer solidification may be air (atmosphere). Specifically, an air-cooling system can be used here. When the plating bath temperature is too high, then the evaporation of zinc from the bath will be remarkable to often cause plating failures and increase the oxide dross amount on the bath surface, and therefore, the plating bath temperature is preferably set within a range of not higher than 550°C.


EXAMPLE 1


A steel having the chemical composition shown in Table 1 was smelted in vacuum to prepare an ingot, which was then forged and hot-rolled to give a hot-rolled sheet having a thickness of 4 mm. The hot-rolled sheet was annealed in an $H_2$-$N_2$ mixed gas atmosphere at 700°C, then dipped in a Zn-Al-Mg alloy plating bath at a bath temperature of 400°C, and pulled up from the plating bath to give a zinc-based alloy-plated steel sheet on which the plating amount per side was controlled to be 90 g/m². The composition of the plating bath was Al: 6.0% by mass, Mg: 3.0% by mass, Ti: 0.002% by mass, B: 0.0005% by mass, Si: 0.01% by mass, and Fe: 0.1% by mass with a balance of Zn.

A sample of 100 mm x 75 mm was cut out of the obtained, plated steel sheet, and this was taken here as a test piece for evaluating the maximum crack length at weld to be caused by molten-metal embrittlement. The metallographic structure of the steel base material (original sheet to be plated) of the plated steel sheet was observed in the cross direction parallel to the rolling direction thereof, and the ferrite area percentage (that is, the percentage by volume of ferrite) was determined. The constitution of the metallographic structure and the ferrite area percentage are shown in Table 1.

The welding test was according to a method of "boss welding" to form the welded part having the appearance as shown in Fig. 1, in which the cross section of the welded part was observed and the occurrence of cracking was checked therein. Concretely, a boss (projection) 1 formed of a steel rod having a size of diameter 20 mm x length 25 mm was vertically stood on the center part of the surface of the test piece 3, and the boss 1 was arc-welded to the test piece 3. YGW12 was used as the welding wire; and after having made a full circle around the boss from the welding start point and further after having passed through the welding start point, the bead welding was promoted a little more, and then stopped. Accordingly, the welding bead 6 was made to overlie the area between the welding start point and the welding end point. The welding condition was as follows: The welding current was 217 A, the welding voltage was 25 V, the welding speed was 0.2 m/min, the shield gas was $CO_2$, and the shield gas flow rate was 20 L/min.

In welding, the test piece 3 was kept constrained as in Fig. 2, for the purpose of experimentally causing easy weld cracking. Concretely, the test piece 3 was put on the center part of the surface of a constrained plate 4 (SS400 steel material defined in JIS) having a size of 120 mm x 95 mm x thickness 4 mm, and the whole circumference of the test piece 3 was previously welded to the constrained plate 4. The thus-integrated, bonded body of test piece 3/constrained plate 4 was fixed on a horizontal laboratory table 5 with two clumps 2, and in that condition, this was boss-welded as in the above. According to this method, the test piece 3 is integrated with the constrained plate 4 by whole circumference welding, and therefore, the expansion/contraction to be caused by the heat in the boss welding is constrained so that the boss welding may readily bring about weld cracking to be caused by the heat stress acting on the test piece 3, thereby facilitating clear evaluation of weld cracking.

After welding, the bonded body of boss 1/test piece 3/constrained plate 4 was cut through the cross section 9 running through the center axis of the boss 1 and through the overlapping part 8 of the welding bead, and the metallographic structure of the part of the test piece 3 around the welding bead in the cross section 9 (that is, the part of the steel base material of the original sheet to be plated) was observed with a microscope. The cracking depth of the deepest cracking that was microscopically observed in the part of the test piece 3 in the cross section was measured, and this was taken as "maximum cracking depth". In consideration of the strength and the fatigue characteristics of the welded part, the samples in which the maximum cracking depth was at most 0.5 mm were regarded as good. The cracking of the steel base material is considered as "molten-metal embrittlement cracking". The results are shown in Table 1.

Table 1

| Sample No. | Chemical Composition of Steel Base Material (% by mass) | | | | | | | | | | | | | | Metallographic Structure of Steel Base Material | | Maximum Cracking Depth (mm) | Remarks |
|---|---|---|---|---|---|---|---|---|---|---|---|---|---|---|---|---|---|---|
| | C | Si | Mn | P | S | N | Ti | B | Cr | Nb | V | Mo | Zr | Value L | Constitution *1 | Ferrite Area Percentage (%) | | |
| A1 | 0.081 | 0.01 | 0.02 | 0.015 | 0.009 | 0.0007 | 0.021 | 0.0031 | - | - | - | - | - | 14.39 | F+B | 85 | 0.27 | Samples of the Invention |
| A2 | 0.048 | 0.02 | 0.47 | 0.015 | 0.008 | 0.0011 | 0.028 | 0.0029 | - | - | - | - | - | 10.78 | F+B | 90 | 0.35 | |
| A3 | 0.044 | 1.02 | 0.19 | 0.009 | 0.008 | 0.0016 | 0.021 | 0.0031 | - | - | - | - | - | 6.29 | F+B | 75 | 0.50 | |
| A4 | 0.038 | 0.01 | 0.29 | 0.020 | 0.009 | 0.0016 | 0.022 | 0.0031 | - | - | - | - | - | 6.48 | F+B | 90 | 0.33 | |
| A5 | 0.042 | 0.02 | 0.39 | 0.018 | 0.009 | 0.0018 | 0.022 | 0.0032 | - | - | - | - | - | 5.83 | F+B | 80 | 0.37 | |
| A6 | 0.032 | 0.63 | 0.16 | 0.010 | 0.002 | 0.0015 | 0.022 | 0.0032 | - | - | - | - | - | 6.99 | F+B | 90 | 0.39 | |
| A7 | 0.011 | 0.01 | 2.00 | 0.011 | 0.003 | 0.0014 | 0.018 | 0.0022 | - | - | - | - | - | 5.75 | F+B | 50 | 0.38 | |
| A8 | 0.070 | 0.01 | 0.25 | 0.018 | 0.007 | 0.0008 | 0.015 | 0.0015 | - | - | - | - | - | 7.86 | F+B | 76 | 0.45 | |
| A9 | 0.012 | 0.01 | 0.20 | 0.014 | 0.008 | 0.0010 | 0.014 | 0.0018 | - | - | - | - | - | 6.37 | F+C | 99 | 0.46 | |
| B1 | 0.045 | 0.01 | 0.09 | 0.012 | 0.008 | 0.0018 | 0.016 | 0.0030 | - | - | - | - | - | 4.71 | F+B | 95 | 0.67 | Comparative Samples |
| B2 | 0.053 | 0.02 | 0.20 | 0.016 | 0.007 | 0.0017 | 0.017 | 0.0017 | - | - | - | - | - | 4.19 | F+B | 95 | 1.30 | |
| B3 | 0.039 | 0.02 | 0.28 | 0.015 | 0.007 | 0.0033 | 0.016 | 0.0019 | - | - | - | - | - | 2.15 | F+B | 90 | 3.20 | |
| B4 | 0.055 | 0.01 | 0.38 | 0.015 | 0.008 | 0.0037 | 0.017 | 0.0023 | - | - | - | - | - | 2.13 | F+B | 80 | 3.20 | |
| B5 | 0.046 | 0.01 | 0.16 | 0.012 | 0.002 | 0.0014 | 0.019 | 0.0012 | - | - | - | - | - | 5.05 | F+B | 90 | 0.72 | |

*1) F: ferrite, B: bainite, P: pearlite, C: cementite, M: martensite

As seen in Table 1, it is known that, in the samples of the invention, the maximum cracking depth is smaller than in the comparative samples, and the molten-metal embrittlement cracking in the former was retarded. In the comparative steels B1 to B5, the maximum cracking depth is large since the value L is outside the defined range. Fig. 3 shows the relationship between the value L and the maximum cracking depth. It is known that, when the value L is not lower than 5.50, the samples can stably gain a remarkable effect of improving the resistance to molten-metalembrittlement cracking.

EXAMPLE 2

A steel having the chemical composition shown in Table 2 was smelted in vacuum to prepare an ingot, which was then forged and hot-rolled to give a hot-rolled sheet. The hot-rolled sheet was washed with acid to remove the scale, and then cold-rolled to give a cold-rolled sheet having a thickness of 4 mm. The cold-rolled sheet was annealed in an $H_2$-$N_2$ mixed gas atmosphere at 800°C, then dipped in a Zn-Al-Mg alloy plating bath at a bath temperature of 400°C, and pulled up from the plating bath to give a zinc-based alloy-plated steel sheet on which the plating amount per side was controlled to be within a range of from 20 to 200 g/m$^2$. The composition of the plating bath was Al: 6.0% by mass, Mg: 3.0% by mass, Ti: 0.002% by mass, B: 0.0005% by mass, Si: 0.01% by mass, and Fe: 0.1% by mass with a balance of Zn.

Test piece was cut out of the obtained, plated steel sheet, and tested in the same experiment as in Example 1. The results are shown in Table 2.

Table 2

| Sample No. | Chemical Composition of Steel Base Material (% by mass) | | | | | | | | | | | | | | Metallographic Structure Maximum of Steel Base Material | | Cracking Depth (mm) | Remarks |
|---|---|---|---|---|---|---|---|---|---|---|---|---|---|---|---|---|---|---|
| | C | Si | Mn | P | S | N | Ti | B | Cr | Nb | V | Mo | Zr | Value L | Constitution *1 | Ferrite Area Percentage (%) | | |
| C1 | 0.022 | 0.70 | 0.22 | 0.010 | 0.009 | 0.0020 | 0.025 | 0.0031 | 0.50 | - | - | - | - | 5.62 | F+B | 65 | 0.30 | Samples of the Invention |
| C2 | 0.025 | 0.02 | 0.16 | 0.010 | 0.002 | 0.0015 | 0.022 | 0.0028 | 1.90 | - | - | - | - | 6.65 | F+P | 46 | 0.29 | |
| C3 | 0.019 | 1.21 | 0.32 | 0.019 | 0.009 | 0.0010 | 0.021 | 0.0030 | - | 0.01 | - | - | - | 9.94 | F+B | 70 | 0.20 | |
| C4 | 0.021 | 0.02 | 0.45 | 0.018 | 0.008 | 0.0016 | 0.020 | 0.0030 | - | 0.09 | 0.07 | - | - | 6.03 | F+B | 75 | 0.27 | |
| C5 | 0.040 | 0.02 | 1.86 | 0.017 | 0.002 | 0.0015 | 0.021 | 0.0047 | - | - | 0.48 | - | - | 8.07 | F+B | 51 | 0.20 | |
| C6 | 0.039 | 0.02 | 1.54 | 0.009 | 0.008 | 0.0016 | 0.022 | 0.0031 | - | - | - | 0.05 | - | 6.48 | F+B | 50 | 0.24 | |
| C7 | 0.017 | 0.02 | 0.42 | 0.025 | 0.008 | 0.0010 | 0.026 | 0.0025 | - | - | - | 0.47 | - | 10.77 | F+B | 70 | 0.23 | |
| C8 | 0.020 | 0.02 | 0.15 | 0.020 | 0.006 | 0.0006 | 0.021 | 0.0020 | - | - | - | - | 0.05 | 14.45 | F+B | 72 | 0.30 | |
| C9 | 0.061 | 0.01 | 0.10 | 0.037 | 0.007 | 0.0008 | 0.023 | 0.0018 | - | - | - | - | 0.49 | 11.25 | F+B | 80 | 0.25 | |
| C10 | 0.067 | 0.41 | 0.03 | 0.020 | 0.009 | 0.0010 | 0.040 | 0.0010 | - | - | - | - | - | 12.94 | F+B | 82 | 0.30 | |
| C11 | 0.029 | 0.02 | 0.03 | 0.018 | 0.007 | 0.0010 | 0.021 | 0.0060 | 0.70 | 0.03 | - | - | - | 13.76 | F+B | 62 | 0.21 | |
| C12 | 0.014 | 0.55 | 0.22 | 0.013 | 0.005 | 0.0021 | 0.028 | 0.0033 | - | 0.02 | - | 0.10 | - | 5.89 | F+B | 80 | 0.28 | |
| C13 | 0.097 | 0.02 | 0.19 | 0.014 | 0.005 | 0.0013 | 0.020 | 0.0020 | 0.60 | - | 0.40 | - | - | 6.45 | F+P | 55 | 0.30 | |
| C14 | 0.036 | 0.02 | 0.20 | 0.016 | 0.004 | 0.0020 | 0.025 | 0.0029 | - | - | - | 0.11 | 0.33 | 5.49 | F+B | 80 | 0.26 | |
| C15 | 0.020 | 0.01 | 0.18 | 0.015 | 0.006 | 0.0019 | 0.026 | 0.0028 | - | 0.01 | 0.36 | 0.15 | - | 5.87 | F+B | 78 | 0.31 | |
| C16 | 0.015 | 0.02 | 0.19 | 0.015 | 0.007 | 0.0018 | 0.023 | 0.0030 | 0.50 | 0.02 | - | - | 0.30 | 5.85 | F+B | 66 | 0.20 | |
| *1) F: ferrite, B: bainite, P: pearlite, C: cementite, M: martensite | | | | | | | | | | | | | | | | | | |

As known from Table 2, it has been confirmed that, even when a cold-rolled steel sheet was used as the steel base material, remarkable resistance to molten-metal embrittlement cracking can be imparted thereto according to the definition of the invention.

EXAMPLE 3

A steel having the chemical composition shown in Table 3 was smelted in vacuum to prepare an ingot, which was then forged and hot-rolled at a finish temperature of 880°C and at a winding-corresponding treatment temperature of 550°C to give a hot-rolled sheet having a thickness of 4 mm. The hot-rolled sheet of D1 was further heated up to a y single phase range (900°C) and then quenched in water to give the sample E1. These materials (E1 is a quenchedmaterial, and the others were hot-rolled sheets) were annealed in an $H_2$-$N_2$ mixed gas atmosphere at 700°C, then dipped in a Zn-Al-Mg alloy plating bath at a bath temperature of 400°C, and pulled up from the plating bath to give plated steel sheets on which the plating amount per side was controlled to be 90 g/m$^2$. The composition of the plating bath was Al: 6.0% by mass, Mg: 3.0% by mass, Si: 0.01% by mass, and Fe: 0.1% by mass with a balance of Zn.

Test piece was cut out of the obtained, plated steel sheet, and tested in the same experiment as in Example 1. Further, from the plated steel sheet, JIS No. 5 tensile test piece of which the lengthwise direction corresponds to the rolling direction thereof was sampled, and tested in a tensile test according to JIS Z2241 to measure the total elongation. The samples of which the total elongation is not lower than 20% were regarded as good (as having good ductility). The results are shown in Table 3.

Table 3

| Sample No. | Chemical Composition of Steel Base Material (% by mass) | | | | | | | | | | | | | | Metanograpnic structure of Steel Base Material | | Maximum Cracking Depth (mm) | Total Elongation (%) | Remarks |
|---|---|---|---|---|---|---|---|---|---|---|---|---|---|---|---|---|---|---|---|
| | C | Si | Mn | P | S | N | Ti | B | Cr | Nb | V | Mo | Zr | Value L | Constitution *1 | Ferrite Area Percentage | | | |
| D1 | 0.092 | 0.02 | 2.00 | 0.019 | 0.009 | 0.0016 | 0.022 | 0.0020 | - | - | - | - | - | 5.60 | F+M | 10 | 0.40 | 21 | Samples of the Invention |
| D2 | 0.076 | 0.02 | 0.40 | 0.015 | 0.008 | 0.0014 | 0.025 | 0.0025 | - | - | - | - | - | 7.48 | F+B | 77 | 0.35 | 38 | |
| D3 | 0.055 | 0.01 | 0.11 | 0.014 | 0.008 | 0.0008 | 0.024 | 0.0015 | - | - | - | - | - | 11.14 | F+B | 90 | 0.30 | 42 | |
| E1 | 0.092 | 0.02 | 2.00 | 0.019 | 0.009 | 0.0016 | 0.022 | 0.0020 | - | - | - | - | - | 5.60 | M | 0 | 0.45 | 10 | Comparative Samples |
| E2 | 0.091 | 0.07 | 1.92 | 0.016 | 0.008 | 0.0014 | 0.023 | 0.0017 | 0.70 | - | - | 0.10 | - | 6.34 | F+B | 5 | 0.45 | 18 | |

*1) F: ferrite, B: bainite, P: pearlite, C: cementite, M: martensite

It is known that the samples of the invention are excellent in resistance to molten-metal embrittlement cracking and are excellent also in ductility (workability). On the other hand, the samples E1 and E2 have a low total elongation since the ferrite area percentage therein is less than 10%, and are therefore poor in workability. In E1 and E2, the steel base material has a chemical composition satisfying the definition in the invention, in which, however, the ferrite amount is controlled to be less than 10% by volume by employing a production condition that falls outside an appropriate condition range.

DESCRIPTION OF REFERENCE NUMERALS

1    Boss
2    Clump
3    Test piece
4    Constrained plate
5    Laboratory table
6    Welding bead
7    Welding bead at the whole circumference weld part of test piece
8    Overlapping part of welding bead
9    Cross section

**Claims**

1.  A zinc-based alloy-plated steel material excellent in resistance to molten-metal embrittlement cracking, which has a zinc-based alloy-plating layer on the surface of a steel base material that has a chemical composition comprising, as % by mass, C: 0.010 to 0.100%, Si: at most 1.50%, Mn: at most 2.00%, P: at most 0.100%, S: at most 0.030%, N: at most 0.0050%, Ti: at most 0.050%, and B: 0.0003 to 0.0100%, with a balance of Fe and inevitable impurities, and having the value L according to the following formula (1) of at least 5.50, and has a metallographic structure comprising ferrite: 10 to 99% by volume with a balance of bainite, pearlite, cementite or martensite:

$$L = \{(Ti/48) + (B/11)\}/(N/14) \ \ldots \ (1).$$

2.  The zinc-based alloy-plated steel material as claimed in claim 1, wherein the steel base material has the chemical composition further containing at least one of Cr: at most 2.00%, Nb: at most 0.10%, V: at most 0.50%, Mo: at most 0.50% and Zr: at most 0.50%.

3.  The zinc-based alloy-plated steel material as claimed in claim 1 or 2, wherein the zinc-based alloy plating is Zn-Al-Mg-based alloy plating.

4.   The zinc-based alloy-plated steel material as claimed in claim 1 or 2, wherein the zinc-based alloyplating layer comprises, by mass, Al: 3.0 to 22.0% and Mg: 1. 0 to 10.0% and further contains at least one of Ti: at most 0.1%, B: at most 0.05%, Si: at most 2.0% and Fe: at most 2.0% with a balance of Zn and inevitable impurities.

Fig.1

Fig.2

Fig.3

## INTERNATIONAL SEARCH REPORT

| | International application No. |
|---|---|
| | PCT/JP2010/053922 |

A.  CLASSIFICATION OF SUBJECT MATTER
*C22C38/00*(2006.01)i, *C22C18/04*(2006.01)i, *C22C38/14*(2006.01)i, *C22C38/58* (2006.01)i

According to International Patent Classification (IPC) or to both national classification and IPC

B.  FIELDS SEARCHED

Minimum documentation searched (classification system followed by classification symbols)
C22C1/00-49/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2007-146275 A  (Nippon Steel Corp.),<br>14 June 2007 (14.06.2007),<br>claims; paragraphs [0027], [0051]; tables 1, 3<br>(Family: none) | 1,2<br>3,4 |
| Y | JP 2006-097129 A  (Nisshin Steel Co., Ltd.),<br>13 April 2006 (13.04.2006),<br>claims; paragraphs [0020] to [0023]<br>(Family: none) | 3,4 |
| P,X | JP 2009-263718 A  (Nippon Steel Corp.),<br>12 November 2009 (12.11.2009),<br>claims; paragraphs [0025], [0044], [0048];<br>table 1; paragraph [0056]; table 2<br>(Family: none) | 1-4 |

☐  Further documents are listed in the continuation of Box C.          ☐  See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| 21 May, 2010 (21.05.10) | 01 June, 2010 (01.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

**Patent documents cited in the description**

- JP 2003003238 A
- JP 2006097129 A
- JP 2008184685 A